# EUROPEAN PATENT APPLICATION

(11) **EP 4 598 084 A1**
(43) Date of publication of application: **06.08.2025**
(21) Application number: 22960950.8
(22) Date of filing: 29.09.2022
(51) Int. Cl.: H04W 16/26, H04W 16/28, H04W 72/0446

(54) **COMMUNICATION DEVICE AND COMMUNICATION METHOD**

(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/036560
(87) International publication number: WO 2024/069890

(57) **Abstract**

This communication device comprises: a reception unit for receiving control information; and a control unit for performing on-off control of an operation executed on the communication device between a base station and a terminal on the basis of an instruction about the on-off control expressly or implicitly indicated by the control information.

## Description

### Technical Field

The present disclosure relates to a communication apparatus and a communication method.

### Background Art

In Universal Mobile Telecommunication System (UMTS) networks, Long Term Evolution (LTE) has been specified with the aim of achieving higher data rates, lower latency, and other improvements. Future systems of LTE have also been studied for achieving a broader bandwidth and a higher speed based on LTE. Successor systems to LTE include, for example, systems referred to as LTE-Advanced (LTE-A), Future Radio Access (FRA), 5th generation mobile communication system (5G), 5G plus (5G+), Radio Access Technology (New-RAT), New Radio (NR), and the like.

Further, in NR, a communication apparatus (which may be referred to as a relay apparatus) that relays signals between a user terminal (User Equipment (UE), which may be simply referred to as a terminal) and a radio base station (which may be simply referred to as a base station) has been studied.

### Citation List

### Non-Patent Literature

NPL 1
3GPP TSG RAN WG1 #109-e, R1-2204534, Discussion on operation scenarios for NCR,

### Summary of Invention

However, there is room for consideration regarding control based on an appropriate indication of an operation related to communication in a communication apparatus that performs relaying.

An aspect of the present disclosure provides a communication apparatus and a communication method each capable of performing control based on an appropriate indication of an operation related to communication.

A communication apparatus according to an aspect of the present disclosure includes: a reception section that receives control information; and a control section that controls turning on or off of an operation performed by the communication apparatus between a base station and a terminal, based on an indication related to the turning on or off of the operation, the indication being explicitly or implicitly indicated by the control information.

A communication method according to an aspect of the present disclosure includes: receiving, by a communication apparatus, control information; and controlling, by the communication apparatus, turning on or off of an operation performed by the communication apparatus between a base station and a terminal, based on an indication related to the turning on or off of the operation, the indication being explicitly or implicitly indicated by the control information.

### Brief Description of Drawings

FIG. 1 is a diagram illustrating an exemplary radio communication system according to an embodiment of the present disclosure;
FIG. 2 is a diagram illustrating exemplary frequency ranges used in a radio communication system according to an embodiment of the present disclosure;
FIG. 3 is a diagram illustrating an exemplary configuration of a radio frame, a subframe, and a slot used in a radio communication system according to an embodiment of the present disclosure;
FIG. 4 is a diagram illustrating an exemplary configuration of NCR 300;
FIG. 5 is a diagram illustrating an example of a beam indication and an ON/OFF indication in a case where NCR supports beam management for an access link;
FIG. 6 is a diagram illustrating an example of a system including an NCR that supports the beam management for the access link;
FIG. 7 is a diagram illustrating an example of an ON/OFF indication in a case where the NCR does not support the beam management for the access link;
FIG. 8 is a diagram illustrating an example of a system including an NCR that does not support the beam management for the access link;

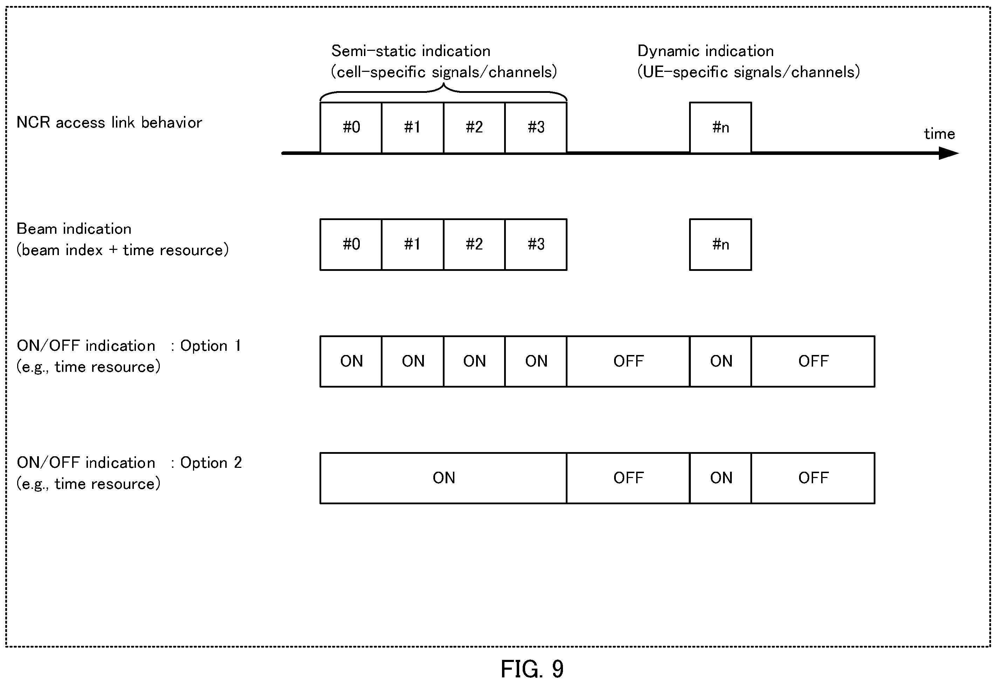

FIG. 9 is a diagram illustrating an example of a beam indication and an ON/OFF indication for Proposal 2;
FIG. 10 is a block diagram illustrating an example of a configuration of a base station according to an embodiment of the present disclosure;
FIG. 11 is a block diagram illustrating an example of a configuration of a terminal according to an embodiment of the present disclosure;
FIG. 12 is a block diagram illustrating an example of a configuration of a relay apparatus according to an embodiment of the present disclosure;
FIG. 13 is a diagram illustrating an example of a hardware configuration of a base station, a relay apparatus, and a terminal according to an embodiment of the present disclosure; and
FIG. 14 is a diagram illustrating an exemplary configuration of a vehicle.

### Description of Embodiments

Hereinafter, an embodiment of the present disclosure will be described with reference to the drawings. Note that the embodiment described below are merely examples, and the embodiment to which the present disclosure is applied are not limited to the following embodiment.

Further, in the embodiment of the present disclosure described below, the terms such as Synchronization signal (SS), Primary SS (PSS), Secondary SS (SSS), Physical broadcast channel (PBCH), Physical random access channel (PRACH), Physical Downlink Control Channel (PDCCH), Physical Downlink Shared Channel (PDSCH), Physical Uplink Control Channel (PUCCH), Physical Uplink Shared Channel (PUSCH), and the like, which are used in 5G New Radio (NR), are used. This is for the sake of convenience in description, and the same signals, functions, and the like may be called by other names.

Further, in the embodiment of the present disclosure, the duplex method may be a Time Division Duplex (TDD) method, a Frequency Division Duplex (FDD) method, or another method (for example, a Flexible Duplex method).

Further, in the embodiment of the present disclosure, the phrase "a radio parameter or the like is "configured,"" may refer to pre-configuration of a predetermined value or configuration of a radio parameter that is indicated from a base station or a terminal.

### <Radio Communication System>

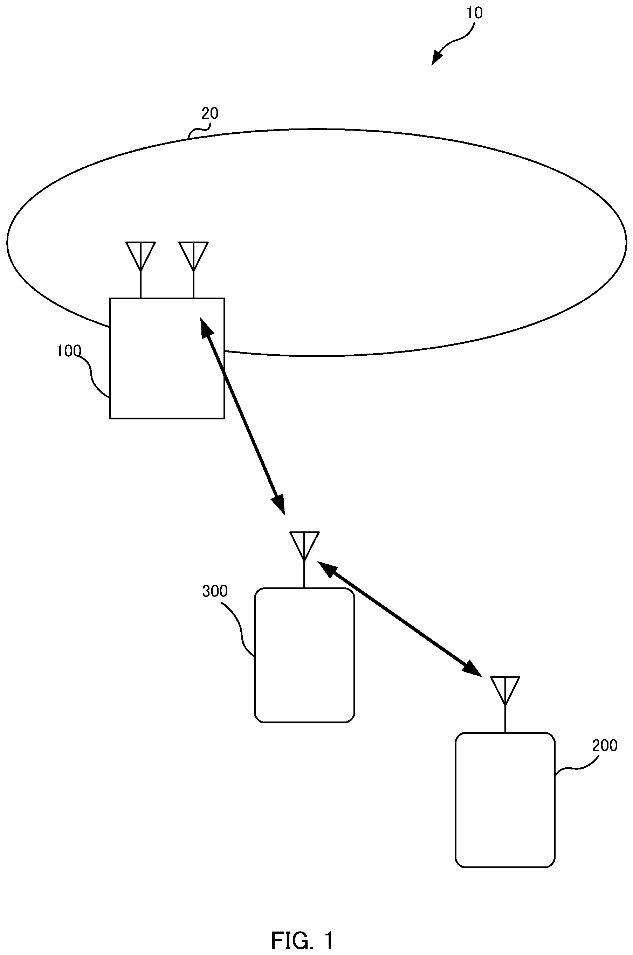

FIG. 1 is a diagram illustrating exemplary radio communication system 10 according to an embodiment of the present disclosure. Radio communication system 10 is a radio communication system in accordance with 5G NR, and includes Next Generation-Radio Access Network 20 (hereinafter, referred to as NG-RAN 20) and terminal 200 (hereinafter, also referred to as user equipment (UE) 200).

Note that radio communication system 10 may be a radio communication system in accordance with a method called Beyond 5G, 5G Evolution, or 6G.

NG-RAN 20 includes base station 100 (hereinafter also referred to as gNB 100). Note that the number of gNBs and UEs is not limited to the example shown in FIG. 1.

NG-RAN 20 actually includes a plurality of NG-RAN nodes, specifically, gNBs (or ng-eNBs), and is connected to a core network (5GC, not illustrated) in accordance with 5G. Note that NG-RAN 20 and 5GC may be simply referred to as "network." Further, in the following, gNB may be read as a network (NW).

For example, gNB 100 is a base station in accordance with 5G, and performs radio communication with UE 200 in accordance with 5G. Further, in the example illustrated in FIG. 1, relay apparatus 300 that relays signals between gNB 100 and UE 200 is illustrated. Relay apparatus 300 performs a relay operation of, for example, transmitting a signal received from gNB 100 to UE 200 and transmitting a signal received from UE 200 to gNB 100. Note that the term "relaying" may be replaced with the term "forwarding." Further, the term "operation" may be replaced with the term "processing," "control," or the like. Further, relay apparatus 300 which is being studied in NR will be described later.

gNB 100 and UE 200 may support Multiple-Input Multiple-Output (MIMO) that generates a beam with higher directivity by controlling a radio signal transmitted from a plurality of antenna elements, carrier aggregation (CA) that uses a plurality of component carriers (CCs) in a bundled manner, and dual connectivity (DC) that performs communication between UE and each of two NG-RAN nodes.

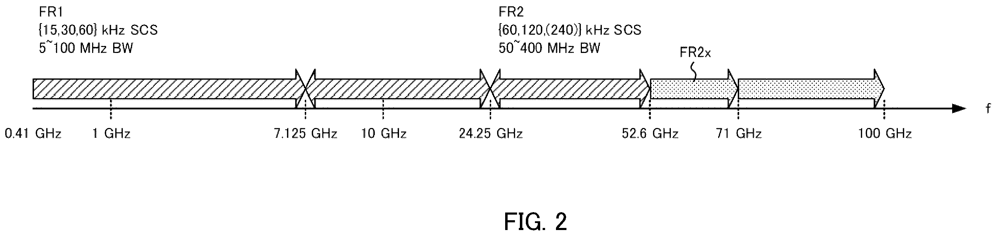

Further, radio communication system 10 may support a plurality of frequency ranges (FRs). FIG. 2 is a diagram illustrating examples of FRs used in radio communication system 10. As illustrated in FIG. 2, radio communication system 10 may support FR1 and FR2. The frequency band of each FR is, for example, as follows.
- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 to 100 MHz may be used. FR2 is a higher frequency than FR1, and an SCS of 60 kHz or 120 kHz (240 kHz may be included) is used, and a bandwidth (BW) of 50 to 400 MHz may be used.

Note that SCS may be interpreted as numerology. Numerology is defined in 3GPP TS 38.300 and corresponds to one subcarrier spacing in the frequency domain.

Further, radio communication system 10 may support a frequency band higher than the frequency band of FR2. Specifically, radio communication system 10 may support a frequency band exceeding 52.6 GHz and up to 114.25 GHz. Such a high frequency band may be referred to as "FR2x" for convenience. In a case where a band exceeding 52.6 GHz is used, Cyclic Prefix - Orthogonal Frequency Division Multiplexing (CP-OFDM)/ Discrete Fourier Transform - Spread - Orthogonal Frequency Division Multiplexing (DFT-S-OFDM) with a larger SCS may be applied.

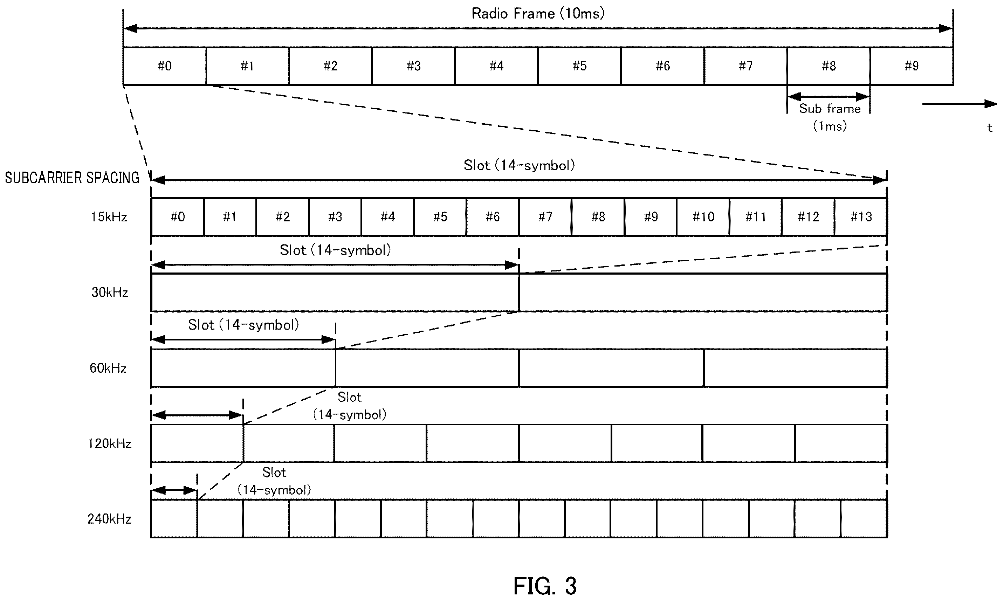

FIG. 3 is a diagram illustrating an exemplary configuration of a radio frame (system frame), a subframe, and a slot used in radio communication system 10. As illustrated in FIG. 3, one slot is configured with 14 symbols, and the symbol duration (and the slot duration) becomes shorter as the SCS becomes larger (wider). Note that the SCS is not limited to the durations (frequencies) illustrated in FIG. 3. For example, 480 kHz, 960 kHz, or the like may be used as the SCS.

Further, the number of symbols constituting one slot is not necessarily 14 symbols (for example, the number of symbols may be 28 or 56 symbols). Further, the number of slots per subframe may vary depending on the SCS.

Note that the time direction (t) illustrated in FIG. 3 may be referred to as a time domain, a symbol period, a symbol time, or the like. Further, the frequency direction may be referred to as a frequency domain, a resource block, a subcarrier, a bandwidth part (BWP), or the like.

As a downlink (DL) signal, gNB 100 transmits control information, configuration information, and the like of gNB 100 to UE 200.

Further, for example, gNB 100 receives, as an uplink (UL) signal, control information of gNB 100, a data signal, information on the processing capability of UE 200 (terminal capability (information); for example, UE capability), and the like from UE 200.

Relay apparatus 300 performs a transfer operation of transferring the DL signal to UE 200. Further, relay apparatus 300 performs a transfer operation of transferring the UL signal to gNB 100. Note that, in the following, the UL signal received by gNB 100 from UE 200 and/or the DL signal received by UE 200 from gNB 100 may be a signal relayed by relay apparatus 300.

UE 200 is a communication apparatus with a radio communication function, such as a smartphone, a mobile phone, a tablet, a wearable terminal, or a communication module for Machine-to-Machine (M2M).

UE 200 receives a control signal or a data signal from gNB 100 in DL and transmits a control signal or a data signal to gNB 100 in UL, thereby utilizing various communication services provided by radio communication system 10. Further, UE 200 receives various reference signals transmitted from gNB 100 and performs measurement of the propagation path quality based on the reception results of the reference signals.

The channel used for DL signal transmission includes, for example, a data channel and a control channel. For example, the data channel may include a Physical Downlink Shared Channel (PDSCH), and the control channel may include a Physical Downlink Control Channel (PDCCH). For example, gNB 100 transmits control information to UE 200 using PDCCH and transmits a DL data signal using PDSCH. Note that PDSCH is an example of a downlink shared channel, and PDCCH is an example of a downlink control channel. Note that the PDCCH may be read as downlink control information (DCI), control information, or the like transmitted in the PDCCH.

The reference signal included in the DL signal may include, for example, at least one of a demodulation reference signal (DMRS), a phase tracking reference signal (PTRS), a channel state information-reference signal (CSI-RS), a sounding reference signal (SRS), and a positioning reference signal (PRS). For example, reference signals such as DMRS and PTRS are used for demodulation of a data signal in DL and are transmitted using PDSCH.

The channel used for UL signal transmission includes, for example, a data channel and a control channel. For example, the data channel may include a Physical Uplink Shared Channel (PUSCH), and the control channel may include a Physical Uplink Control Channel (PUCCH). For example, UE 200 transmits control information using PUCCH and transmits a UL data signal using PUSCH. Note that PUSCH is an example of an uplink shared channel, and PUCCH is an example of an uplink control channel. The shared channel may also be referred to as a data channel. Note that PUSCH or PUCCH may be read as uplink control information (UCI), control information, or the like transmitted in PUSCH or PUCCH.

The reference signal included in the UL signal may include, for example, at least one of DMRS, PTRS, CSI-RS, SRSRS, and PRS for position information. For example, reference signals such as DMRS and PTRS are used for demodulation of UL data signals and are transmitted using PUSCH.

### <Relay Apparatus>

In Release 18 (Rel-18) of 3GPP, a new study item on NR Network-controlled Repeater is being considered. Hereinafter, an NR Network-controlled Repeater is abbreviated as NCR. NCR may correspond to, for example, relay apparatus 300 of FIG. 1. Hereinafter, NCR is sometimes referred to as NCR 300. The term NCR may be replaced with a term such as a repeater, transfer apparatus, communication apparatus, or the like.

In NCR, unlike a conventional amplify and forward repeater, at least one of the control of the timing of transmission, the control of the timing of reception, the control of whether to perform a DL operation or a UL operation (for example, switching), and the control of turning ON and OFF the operation of NCR may be executed. Further, power control may be performed in NCR. Further, in NCR, it is possible to control the directivity in the transmission operation and/or the reception operation. That is, in NCR, the beam to be transmitted and/or the beam to be received may be controlled.

The policy of the Work Item (WI) on NCR in Rel. 18 focuses on the following scenarios and assumptions in accordance with the recommendations defined in TR 38.867. Note that NCR may also be referred to as NR NCR.

NCR is an inband radio frequency (RF) repeater used to extend the network coverage in the bands of FR1 and FR2 based on the NCR model in TR38.867.

The NCR is a single-hop fixed-type apparatus dedicated to NCR.

NCR is transparent to UEs.

Further, NCR may simultaneously maintain a link between gNB and NCR (which may be referred to as a "gNB-repeater link") and a link between NCR and UE (which may be referred to as a "repeater-UE link").

In view of the above points, NCR may support the following points.

### - Specification of signaling and operations for side control information for controlling NCR-Fwd

Note that the side control information includes, as an example, at least some pieces of information on beam forming, information on UL-DL operation, information on ON/OFF, and information on power control. Note that the power control aspect has been discussed in 3GPP meetings.

### - Specification of control plane signaling and procedures

For example, a configuration of signaling for indicating the side control information may be supported. Note that a down-selection of the solutions in Section 7.2 of TR 38.867 may be required.

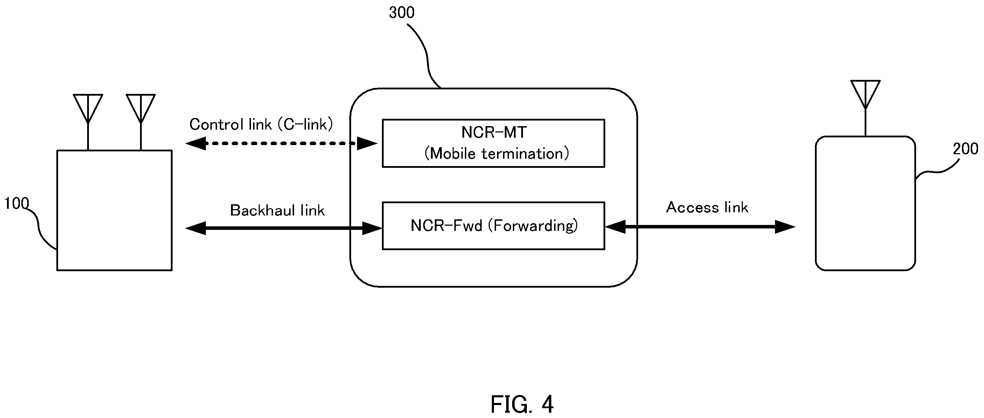

FIG. 4 is a diagram illustrating an exemplary configuration of NCR 300. NCR 300 is present between UE 200 and gNB 100. Note that, NCR 300 may be present between UE 200 and gNB 100 in the real space, or need not be present between UE 200 and gNB 100 in the real space.

NCR 300 receives a UL signal transmitted from UE 200 to gNB 100 and transmits the UL signal to the destination gNB 100. In other words, NCR 300 transfers the UL signal transmitted from UE 200 to gNB 100 to the destination gNB 100. Further, NCR 300 receives a DL signal transmitted from gNB 100 to UE 200 and transmits the DL signal to the destination UE 200. In other words, NCR 300 transfers a signal transmitted from gNB 100 to UE 200 to the destination UE 200.

Further, NCR 300 may operate based on control information received from gNB 100.

As illustrated in FIG. 4, the link between NCR 300 and UE 200 may be referred to as an access link. Further, as illustrated in FIG. 4, two links exist between NCR 300 and gNB 100. Of the two links, the link that transmits a signal received from UE 200 to gNB 100 may be referred to as a backhaul link. Note that, in the backhaul link, NCR 300 may receive a signal for UE 200 from gNB 100. Of the two links, the link for exchanging information between gNB 100 and NCR 300 may be referred to as a control link (hereinafter, sometimes referred to as a C-link). For example, in the control link, exchange of side control information may be performed.

Note that, in FIG. 4, an example is illustrated in which gNB 100 included in the C-link and gNB 100 included in the backhaul link are the same, but gNB 100 included in the C-link and gNB 100 included in the backhaul link may be different from each other.

Further, the frequency (for example, carrier or frequency band) used for communication in the C-link, the frequency used for communication in the backhaul link, and the frequency band used for communication in the access link are not particularly limited. These three frequencies may be the same as one another, or at least two of the three frequencies may be different from each other. Further, one of the three frequencies may include another one of the frequencies.

Further, for each of the three links, C-link, backhaul link, and access link, the link in the direction toward gNB 100 may be referred to as an uplink, and the link in the direction opposite to the uplink may be referred to as a downlink. In this case, the frequency used for uplink communication and the frequency used for downlink communication in each of the three links may be the same as each other or may be different from each other.

NCR 300 in FIG. 4 includes two functional entities referred to as NCR-MT and NCR-Fwd. Note that, NCR-MT and NCR-Fwd may be represented by different names (for example, NCR_MT and NCR_Fwd), respectively.

NCR-MT is a functional entity that communicates with gNB 100 via a control link (C-link) and enables information exchange with gNB 100. The information exchange with gNB 100 may be, for example, transmission and reception of side control information. Further, the control link may be based on the Uu interface of NR. NCR-MT may be regarded as equivalent to a UE.

Indications for communication control for the access link (and for the backhaul link, if necessary) may be identified (specified or provided) by the side control information. For example, a beam indication for an access link (and, if necessary, for a backhaul link) and an ON/OFF indication for NCR may be identified (specified or provided) by the side control information.

The beam indication corresponds to an indication for NCR to perform beam control. The beam indication is performed, for example, from the gNB to the NCR. The beam indication may include an indication of a beam to be used by the NCR, information on a resource (for example, a time resource) in which the NCR is to use the beam, and the like. Further, the ON/OFF indication corresponds to an indication for NCR to perform control to turn NCR (NCR-Fwd and/or NCR-MT) ON and control to turn NCR OFF. The ON/OFF indication is made, for example, from the gNB to the NCR. The ON/OFF indication may be at least one of an indication to turn NCR ON and an indication to turn NCR OFF. The indication to turn NCR ON may include information on a resource (for example, a time resource) in which NCR is turned ON. The indication to turn NCR OFF may include information on a resource (for example, a time resource) in which NCR is turned OFF. Note that the beam indication and the ON/OFF indication may include indications other than the above indications, or need not include some of the above indications.

Note that the "indication" of a certain function (or operation) may represent information for performing the function (or operation), or may represent an operation such as transmission (or notification) of information for performing the function (or operation). Note that the term "indication" may be replaced with a term such as an indicator, information, parameter, or the like. For example, the beam indication may indicate information for performing beam control, or may indicate an operation such as transmission (or notification) of information for performing beam control.

In the following description, a beam indication for an access link is described as an example, but the beam indication in the following description may be replaced with a beam indication for a backhaul link, or may be for both an access link and a backhaul link. Further, in the following description, the ON/OFF indication is, for example, at least one of an indication to turn NCR-Fwd ON and an indication to turn NCR-Fwd OFF, but is not limited thereto, and may be, for example, at least one of an indication to turn NCR-Fwd and/or NCR-MT ON and an indication to turn NCR-Fwd and/or NCR-MT OFF.

Note that, in NCR-MT, the side control information may include at least information for controlling NCR-Fwd. Further, the side control information may be indicated by at least one signaling of radio resource control (RRC), Medium Access Control Control Element (MAC CE), and downlink control information (DCI).

NCR-Fwd is a functional entity that transfers signals between gNB and UE via a backhaul link and an access link. For example, NCR-Fwd performs amplification and transfer of a UL radio frequency (RF) signal. Further, the amplification and transfer of the RF signal in the DL are performed. Note that the operation of NCR-Fwd may be controlled in accordance with the side control information received from gNB 100.

For the NCR illustrated in FIG. 4, in RAN1#109, the following points were agreed upon regarding transmission and reception in the C-link of NCR and transmission and reception in the backhaul link of NCR.

It was agreed that the UL of the C-link and the UL of the backhaul link are executed by time division multiplexing (TDM). On the other hand, simultaneous transmission of the UL of the C-link and the UL of the backhaul link depends on the function or capability of NCR. That is, NCR may have the capability to perform simultaneous transmission of the UL of the C-link and the UL of the backhaul link.

Further, the DL of the C-link and the DL of the backhaul link may be performed simultaneously or may be performed by TDM.

Note that, multiplexing using a TDM scheme or the like is controlled by gNB in consideration of the capability of NCR. For example, the TDM between the UL of the C-link and the UL of the backhaul link is controlled by gNB in consideration of the capability of NCR.

### <Consideration>

There is room for consideration of the indication for controlling communication in NCR. For example, in NCR, there is room for consideration of a specific method (for example, a procedure or a mechanism) for an appropriate ON/OFF indication.

For example, if the ON/OFF indication is not performed appropriately, there is a possibility that the communication quality between the base station and the terminal may deteriorate, interference with surrounding communication apparatuses may occur, and the power consumption of the NCR may increase.

For example, if the indication to turn NCR ON is not performed appropriately, NCR is possibly not turned ON at the appropriate time and possibly remain to be OFF. In this case, the transfer operation of NCR-Fwd in the communication between the base station and the terminal cannot be executed, resulting in a deterioration in the communication quality between the base station and the terminal.

Further, for example, in a case where the indication to turn NCR OFF is not performed appropriately, NCR is not turned OFF and remains to be ON. In this case, NCR-Fwd executes the transfer operation in the communication between the base station and the terminal unnecessarily, and thus, an unnecessary signal is transmitted from NCR-Fwd, causing interference with surrounding communication apparatuses (for example, a base station, a terminal, and another NCR). Further, since NCR-Fwd transmits (transfers) a signal unnecessarily, the power consumption of NCR increases.

Further, in a case where the ON/OFF indication is not appropriately performed, the overhead of signaling related to the ON/OFF indication possibly increases.

For example, in a case where the ON/OFF indication is associated with another indication related to communication control, the signaling overhead increases by the ON/OFF indication being performed independently of the other indication. Note that, the ON/OFF indication being associated with another indication related to communication control may correspond to one of the ON/OFF indication and the other indication related to communication control implicitly indicating the other, or may correspond to one of the ON/OFF indication and the other indication related to communication control also serving as the other.

On the other hand, even in a case where the ON/OFF indication is associated with another indication related to communication control, an NCR that does not support communication control based on the other indication cannot correspond to the other indication, and thus possibly cannot perform control based on the ON/OFF indication.

For example, as another example of communication control, beam control (which may be referred to as beam management) is possibly associated with an ON/OFF indication. The presence or absence of an explicit ON/OFF indication may vary depending on whether the NCR supports beam management.

Note that the fact that NCR supports beam management may correspond to the fact that NCR can perform beam control, the fact that NCR can form a beam by receiving an indication from gNB, or the fact that a configuration related to beam control can be made in NCR.

For example, the following points may be considered regarding the presence or absence of support for beam management and the ON/OFF indication.

In a case where the NCR supports beam management for the access link, the operation of the NCR requires a beam indication. Note that, in this case, the NCR that has received the beam indication is assumed to be in the ON state in the corresponding time resource. Thus, an explicit ON/OFF indication may be unnecessary. Alternatively, in this case, an explicit ON/OFF indication may be necessary.

In a case where the NCR does not support beam management for the access link, a beam indication is not performed, and thus, an ON/OFF indication is required for the operation of turning the NCR ON/OFF. Note that, in this case, the number of beams for beam management may be considered to be one.

For example, a case where the NCR supports beam management for the access link corresponds to a case where the NCR is capable of switching the beam used in the access link from among a plurality of beams that can be formed by the NCR. Further, illustratively, a case where NCR supports beam management for an access link corresponds to a case where the NCR corresponds to beam management and/or a case where the frequency range is FR2.

Further, a case where the NCR does not support beam management for the access link may correspond to a case where the NCR is not capable of forming a plurality of beams. Alternatively, a case where NCR does not support beam management for the access link may correspond to a case where the NCR is not capable of switching the beam used in the access link, that is, a case where the NCR uses one beam in the access link or does not perform directivity control in the access link (uses a non-directional beam). Thus, the number of beams for beam management may be considered to be one. Further, illustratively, a case where the NCR does not support beam management for the access link corresponds to a case where the NCR does not correspond to beam management and/or a case where the frequency range is FR1.

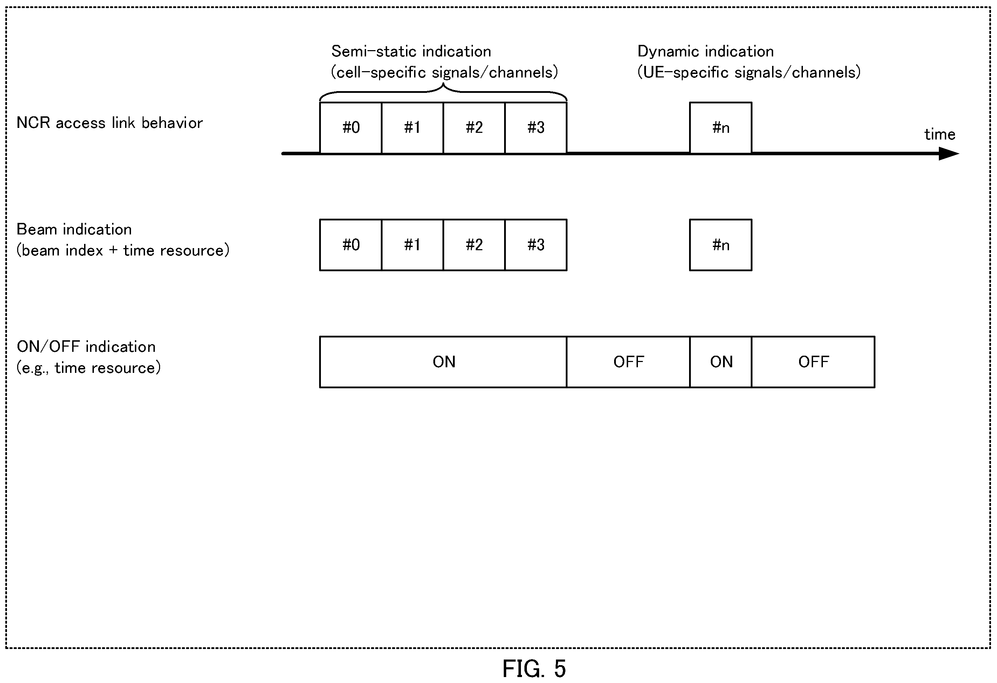

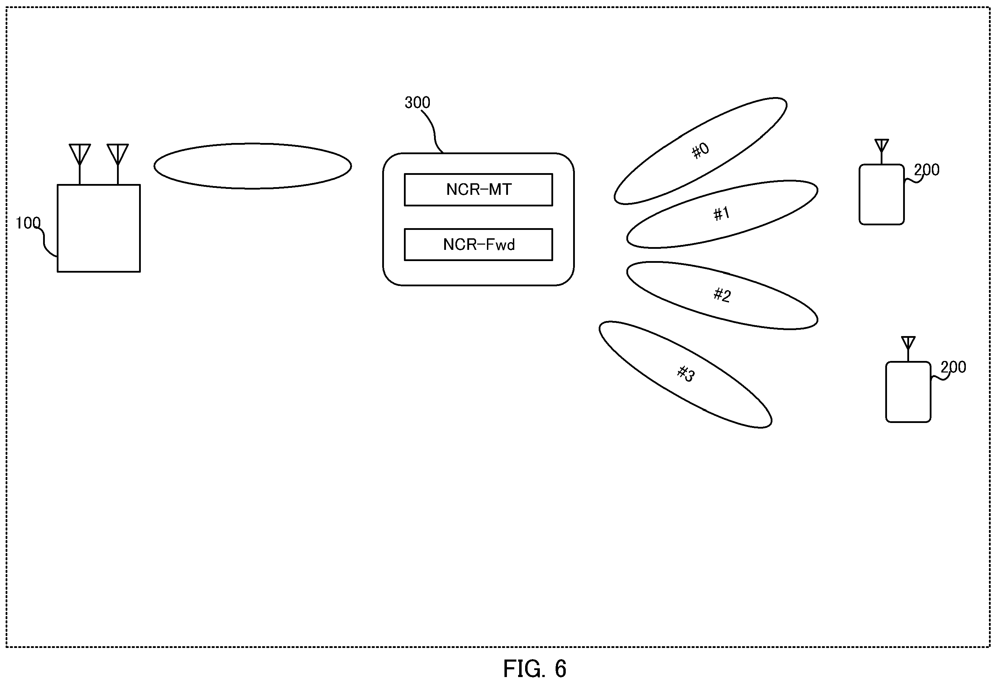

FIG. 5 is a diagram illustrating an example of a beam indication and an ON/OFF indication in a case where NCR supports beam management for an access link. FIG. 6 is a diagram illustrating an example of a system including an NCR that supports beam management for the access link illustrated in FIG. 5. Note that FIGS. 5 and 6 may correspond to the case of FR2 by way of example.

FIG. 5 illustrates examples of a beam indication, an ON/OFF indication, and a behavior of NCR in an access link based on the indication. Note that the horizontal axis in the behavior of the NCR in the access link represents the time axis. The beam indication includes a time resource and identification information (beam index) of a beam to be used in the time resource. Further, FIG. 5 illustrates a case where the beam indication is a semi-static indication and a case where the beam indication is a dynamic indication. Note that the semi-static indication is, for example, an indication in a case where a cell-specific signal and/or channel is transmitted from the base station to the UE. The dynamic indication may be, for example, an indication in a case where a UE-specific signal and/or channel is transmitted from the base station to the UE. The cell-specific signal and/or channel may be, for example, a synchronization signal block (SSB) or the like, and the UE-specific signal and/or channel may be, for example, a PDSCH, PUSCH, or the like.

As illustrated in FIG. 5, in a case where the NCR supports beam management for the access link, a beam indication is performed, and thus the ON/OFF is implicitly indicated by the beam indication. Therefore, the ON/OFF indication may be unnecessary.

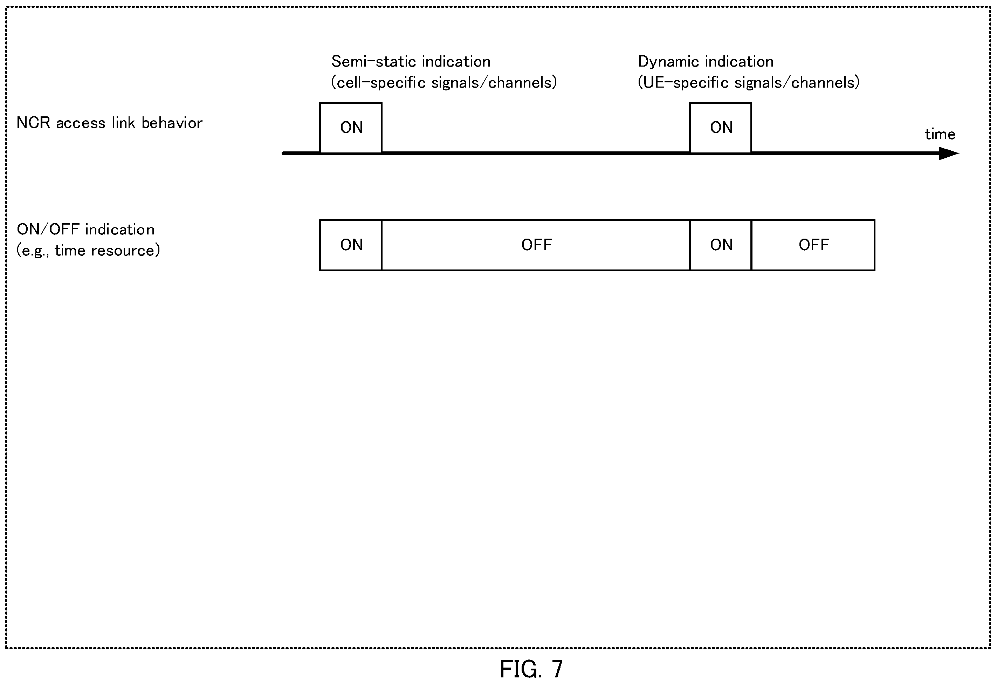

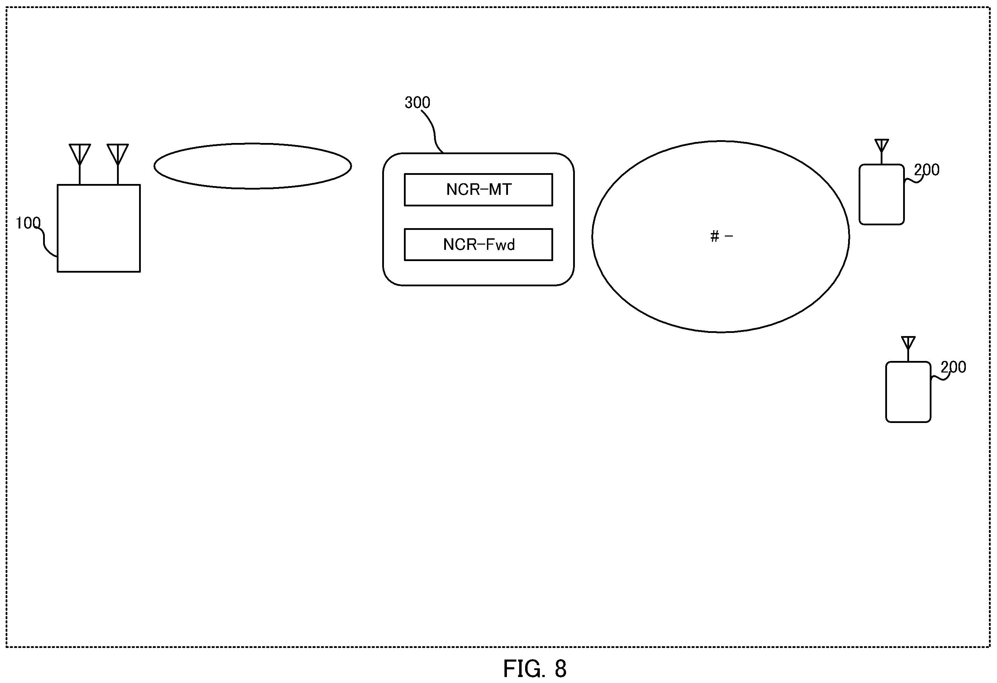

FIG. 7 is a diagram illustrating an example of an ON/OFF indication in a case where the NCR does not support beam management for the access link. FIG. 8 is a diagram illustrating an example of a system including the NCR that does not support beam management for the access link illustrated in FIG. 7. Note that FIGS. 7 and 8 may correspond to the case of FR1 by way of example.

FIG. 7 illustrates an example of the ON/OFF indication and the behavior of the NCR in the access link based on the indication. Note that the horizontal axis in the behavior of the NCR in the access link represents the time axis.

As illustrated in FIG. 7, in a case where the NCR does not support beam management for the access link, the beam indication is not performed, so that the ON/OFF is not implicitly indicated by the beam indication. Thus, the ON/OFF indication may be necessary.

As described above, in a case where the ON/OFF indication is associated with an indication related to beam management, the ON/OFF is implicitly indicated by the indication related to beam management (beam indication), and thus, when the ON/OFF indication is performed independently of other indications, the overhead of signaling related to the ON/OFF indication increases.

However, at present, only performing of the ON/OFF control is defined, and performing of ON/OFF control based on an appropriate ON/OFF indication that takes into consideration an increase in overhead, a deterioration in communication quality between a base station and a terminal, interference with surrounding communication apparatuses, an increase in power consumption of an NCR, and the like is not defined.

In the present embodiment, an example in which an ON/OFF indication for NCR is implicitly performed and an example in which an ON/OFF indication for NCR is explicitly performed will be described with respect to the above-described considerations. Further, in the present embodiment, an example will be described in which an ON/OFF indication for NCR is associated with an indication related to other communication control and is performed integrally.

Hereinafter, each proposal will be described.

### <Proposal 1>

Proposal 1 relates to the ON/OFF operation of NCR-Fwd and an indication related to the ON/OFF operation. Hereinafter, in Option 1 of Proposal 1, an example in which the ON/OFF indication for NCR is performed implicitly will be described, and in Option 2 of Proposal 1, an example in which the ON/OFF indication for NCR is performed explicitly will be described.

### <Option 1 of Proposal 1>

Option 1 of Proposal 1 is an implicit way. In Option 1 of Proposal 1, NCR-Fwd follows an implicit indication of ON/OFF. For example, in Option 1 of Proposal 1, NCR-Fwd is always ON in the time resource indicated by a beam index and/or beam information for the access link. In other words, in Option 1 of Proposal 1, the indication to turn NCR-Fwd ON is implicitly performed by a beam index and/or beam information for the access link. The phrase "time resource indicated by a beam index and/or beam information for the access link" is herein an example of information included in a beam indication.

Note that, the following matters have been agreed upon in 3GPP regarding NCR.

NCR-Fwd may be assumed to be always "OFF" unless explicitly or implicitly indicated by the gNB. Note that this may be applied regardless of the RRC state of NCR-MT. Further, in a case where NCR-MT is in an RRC idle and/or inactive state, an indication for controlling the ON-OFF operation of NCR-Fwd (for example, an indication received when NCR-MT is RRC-connected) or the DRX state of NCR-MT need not be excluded. Further, this agreement does not mean a signaling design for the ON-OFF of NCR-Fwd.

NCR-Fwd may always be OFF unless explicitly or implicitly indicated otherwise, as shown in the agreement above. For example, NCR-Fwd may always be OFF in a time resource that is not indicated by a beam index and/or beam information for the access link (a time resource where no beam indication is present).

In a case where the NCR supports beam management for the access link, the operation of NCR-Fwd requires a beam indication. In a case where, for example, no beam indication is made, the NCR does not recognize which beam for the access link should be configured in the time resource.

An indication other than the beam indication may be used to determine the ON state of NCR-Fwd instead of the beam indication. Further, an indication other than the beam indication may be used to determine the ON state of NCR-Fwd together with the beam indication. In other words, the indication to turn NCR-Fwd ON may be performed implicitly by an indication other than the beam indication, or the indication to turn NCR-Fwd ON may be performed implicitly by both the beam indication and the indication other than the beam indication.

The indication other than the beam indication may be herein, for example, at least one of indications related to communication control such as a power indication, a TDD configuration, a timing indication, and the like.

For example, NCR-Fwd may always be ON in a time resource indicated by an indication other than the beam indication. In a case where NCR-Fwd explicitly receives an indication (for example, a power indication) indicating that a signal is transmitted with certain power in a certain time resource, NCR-Fwd may be turned ON in the resource. In this case, NCR-Fwd may be OFF in a time resource that is not indicated by the power indication.

For example, in a case where an indication other than the beam indication is used to determine the ON state instead of the beam indication, the ON/OFF indication may be unnecessary regardless of whether the NCR supports beam management. For example, in a case where the power indication is used to determine the ON state, the ON/OFF indication may be unnecessary when the NCR supports power management, and the ON/OFF indication may be necessary when the NCR does not support power management.

In Option 1 of Proposal 1, the ON/OFF indication is performed implicitly. In this case, NCR controls the ON or OFF of NCR based on the ON/OFF indication. Then, in Option 1 of Proposal 1, the ON/OFF indication is exemplarily performed implicitly by a beam indication or another indication related to communication control other than the beam indication. Thus, since the ON/OFF indication is not performed independently of another indication, it is possible to suppress an increase in the overhead of signaling related to the ON/OFF indication.

For example, the NCR that supports the communication control (for example, beam control) may receive another indication related to communication control other than the beam indication, and may control the ON or OFF of the NCR based on an implicit ON/OFF indication indicated by the indication.

### <Option 2 of Proposal 1>

Option 2 of Proposal 1 is an explicit way. In Option 2 of Proposal 1, NCR-Fwd follows an explicit ON/OFF indication. For example, in Option 2 of Proposal 1, NCR-Fwd always follows the explicit ON/OFF indication or NCR-Fwd always prioritizes the explicit ON/OFF indication. For example, when the beam index is configured for a time resource and an explicit indication of OFF is received, NCR Fwd is turned OFF. In other words, even in a case where an indication to be turned ON is implicitly made by a beam index or the like, when an explicit indication to be turned OFF is received, NCR Fwd is turned OFF in accordance with the explicit indication (or by prioritizing the explicit indication).

In a case where NCR-Fwd prioritizes an explicit ON/OFF indication, NCR-Fwd may perform ON/OFF control based on another indication when there is no explicit ON/OFF indication.

Note that, in Option 2 of Proposal 1, NCR (NCR-MT and NCR-Fwd) may follow an explicit ON/OFF indication. In other words, both NCR-MT and NCR-Fwd may follow an explicit ON/OFF indication. Note that, in this case, the explicit ON/OFF indication may be performed individually for each of NCR-MT and NCR-Fwd. For example, the indication to turn NCR-MT ON (or OFF) and the indication to turn NCR-Fwd ON (or OFF) may be performed individually. Alternatively, an explicit ON/OFF indication may be performed collectively for NCR-MT and NCR-Fwd. For example, an indication to turn NCR-MT and NCR-Fwd ON (or OFF) may be explicitly performed.

Note that, in Option 2 of Proposal 1, NCR-Fwd may follow an explicit ON/OFF indication, while NCR-MT need not follow an explicit ON/OFF indication. In this case, NCR-MT may always be ON. Alternatively, NCR-MT may follow an ON/OFF indication that is different from an explicit indication of ON/OFF for NCR-Fwd. For example, NCR-MT may follow the implicit ON/OFF indication as in the example shown in Option 1.

In Option 2 of Proposal 1, the ON/OFF indication is explicitly performed. In this case, NCR controls the ON or OFF of the NCR based on an explicit ON/OFF indication. Thus, the NCR can explicitly receive an ON/OFF indication, and the ON or OFF of the NCR can be appropriately controlled. Thus, it is possible to prevent deterioration in communication quality between the base station and the terminal, interference with surrounding communication apparatuses, and an increase in power consumption of the NCR.

For example, even for an NCR that does not support the communication control (for example, beam control), the NCR can receive an explicit ON/OFF indication and control the ON or OFF of the NCR based on the ON/OFF indication.

### <Variation of Proposal 1>

As described above, in Option 1 of Proposal 1, the ON/OFF indication is implicitly performed by beam indication, and in Option 2 of Proposal 1, the ON/OFF indication is explicitly performed. In the following Variations 1 to 4 of Proposal 1, examples will be described in which an indication to be followed (indication to be prioritized) between the implicit ON/OFF indication and the explicit ON/OFF indication is defined. Note that Variations 1 to 4 correspond to cases where NCR assumes both an explicit ON/OFF indication and a beam indication as an example of an implicit ON/OFF indication.

### <Variation 1>

In a case where both an explicit OFF indication and a beam indication are configured/indicated, the NCR may follow the beam indication or may prioritize the beam indication. For example, when the beam index is configured for a certain time resource with an explicit indication to turn NCR-Fwd OFF, NCR-Fwd may be turned ON. In this case, the NCR follows the beam indication regardless of the explicit OFF indication. Alternatively, in this case, the NCR prioritizes the beam indication over the explicit OFF indication. Note that the beam indication here may be interpreted as implicitly indicating turning NCR-Fwd ON.

### <Variation 2>

In a case where both an explicit ON indication and a beam indication are configured/indicated, the NCR may follow the beam indication or may prioritize the beam indication. For example, in a case where there is an explicit indication to turn NCR-Fwd ON and the beam index is not configured for the time resource, NCR-Fwd may be turned OFF. Alternatively, in a case where there is an explicit indication to turn NCR-Fwd ON and a specific beam index (for example, beam='NULL') is indicated for the time resource, NCR-Fwd may be turned OFF. In this case, NCR follows the beam indication regardless of the explicit ON indication. Alternatively, in this case, NCR prioritizes the beam indication over the explicit ON indication. Note that a case where the beam index is not configured for the time resource and a case where a specific beam index (for example, beam='NULL') is indicated for the time resource are exemplary cases that are based on the beam indication. Further, this beam indication may be interpreted as implicitly indicating that NCR-Fwd is to be turned OFF.

### <Variation 3>

In a case where both an explicit ON indication and a beam indication are configured/indicated, the NCR may follow the explicit ON indication or may prioritize the explicit ON indication. For example, in a case where there is an explicit indication to turn NCR-Fwd ON and the beam index is not configured for the time resource, NCR-Fwd may be turned ON. Alternatively, in a case where there is an explicit indication to turn NCR-Fwd ON and a specific beam index (for example, beam='NULL') is indicated for the time resource, NCR-Fwd may be turned ON. In this case, NCR follows the explicit ON indication regardless of the beam indication. Alternatively, in this case, the NCR prioritizes the explicit ON indication over the beam indication. Note that, in this case, there may be a situation where the beam to be used by the NCR is not indicated. In a case where the beam to be used by the NCR is not indicated, the beam used by the NCR may be a specific beam. The specific beam may be determined, for example, by a pre-defined rule or may be determined depending on the implementation of NCR. Note that the beam indication here may be interpreted as implicitly indicating to turn NCR-Fwd OFF.

### <Variation 4>

In a case where both an explicit OFF indication and a beam indication are configured/indicated, NCR may follow the explicit OFF indication or may prioritize the explicit OFF indication. For example, in a case where the beam index is configured for a certain time resource with an explicit indication to turn NCR-Fwd OFF, NCR-Fwd may be turned OFF in the time resource. In this case, the NCR follows the explicit OFF indication regardless of the beam indication. Alternatively, in this case, the NCR prioritizes the explicit OFF indication over the beam indication.

Variations 1 to 4 described above illustrate examples in which the ON/OFF indications respectively indicated by the beam indication as an example of an implicit ON/OFF indication and the explicit ON/OFF indication are different from each other.

As other variations, an example in which both a beam indication as an example of an implicit ON/OFF indication and an explicit ON/OFF indication need not be assumed to be present, and an example in which both may be assumed to be present will be described.

### <Variation 5>

For example, in a time resource with an explicit OFF indication, the NCR need not assume a beam indication for the time resource. Note that not assuming a beam indication for a time resource may correspond to a beam index being not configured for the time resource or a specific beam index (for example, beam='NULL') being configured for the resource.

### <Variation 6>

Further, in a time resource with an explicit ON indication, the NCR may assume a beam indication for the time resource.

Note that both the indication to turn ON and the indication to turn OFF may be explicit. For example, the NCR may be turned ON in response to an explicit ON indication and may be turned OFF in response to an explicit OFF indication.

Further, one of the ON indication and the OFF indication may be explicit, and the other may be implicit. For example, the NCR may be turned ON in response to an explicit ON indication, and may be turned OFF implicitly by not receiving an explicit ON indication. Alternatively, the NCR may be turned OFF in response to an explicit OFF indication, and may be turned ON implicitly by not receiving an explicit OFF indication.

### <Proposal 2>

Proposal 2 relates to an indication method that combines a beam indication for an access link and an ON/OFF indication for NCR-Fwd. For example, Proposal 2 relates to a unified indication or a unified design of a beam indication for an access link and an ON/OFF indication for NCR-Fwd.

### <Case 1 of Proposal 2>

Case 1 of Proposal 2 is a case where both a beam indication and an ON/OFF indication are present. Note that the ON/OFF indication here may be an explicit way as shown in Option 2 of Proposal 1.

Note that, in Case 1 of Proposal 2, the beam indication is assumed to include a "beam index" and a "time resource." In this assumption, options for Case 1 of Proposal 2 will be described.

### <Option 1 of Case 1 in Proposal 2>

In Option 1, the indication of the time resource is shared with that for the beam indication.

The time resource included in the beam indication may be configured/indicated by RRC/MAC-CE/DCI. Then, a parameter/indication mechanism in common with that of the beam indication may be used for the time resource of the ON/OFF indication. For example, in a case where a time domain resource allocation (TDRA) table and/or k is configured by RRC for beam indication, the time resource for the ON/OFF indication may also follow the TDRA table and/or k configured for beam indication. Here, the indication mechanism may include the procedure for indication, the method for indication, the method of signaling used for indication, the flow of indication, and the like.

The TDRA table and k are each used in scheduling of time resources (for example, time resources of channels such as PDSCH and/or PUSCH) and are configured by RRC. The TDRA table includes information such as an index of a slot (an example of a time interval), a start symbol, and the number of symbols. The letter k indicates, for example, the number of slots (or slot interval) corresponding to the interval from the slot in which the indication is received to the slot in which the operation based on the indication is performed. Note that the common parameters are not limited to these. For example, in a case where the time resource in the beam indication is configured by a parameter different from the TDRA table and k, the time resource in the ON/OFF indication may also follow the parameter.

Alternatively, the same indication mechanism may be used between the beam indication and the ON/OFF indication. For example, a specific beam index may be used for the ON/OFF indication. That is, an indication mechanism based on a beam index, which is a mechanism of beam indication, may be used for the ON/OFF indication. The specific beam index may be, for example, "NULL," "0," or "N." Note that the beam index may be an integer of 0 or more and N or less, and N may be an integer of 0 or more. N is the maximum value of the beam index.

An example in which a specific beam index is "NULL" will be described. For example, in the case of a beam indication with a beam index of "NULL," the NCR recognizes that the beam indication is for ON/OFF indication. In other words, the NCR interprets (or "recognizes" or "regards") a beam indication with a beam index of "NULL" as an ON/OFF indication.

An example in which the specific beam index is "0" will be described. For example, in a case where beam index = 0 is indicated, the NCR may be OFF. Further, in a case where another beam index other than 0 (for example, beam index = 1, 2, ..., N) is indicated, the NCR may be ON. Further, in a case where another beam index other than 0 is indicated, the NCR may use a beam corresponding to the indicated beam index.

An example in which a specific beam index is "N" will be described. For example, in a case where beam index = N is indicated, the NCR may be OFF. Further, in a case where another beam index other than N (for example, beam index = 0, 1, ..., N-1) is indicated, the NCR may be ON. Further, in a case where another beam index other than N is indicated, the NCR may use a beam corresponding to the indicated beam index.

Note that the specific beam index is not limited to "NULL," "0," or "N." For example, the specific beam index may be any one of 1 to N-1. Further, the specific beam index may be two or more of "NULL" and "0" to "N." Further, the specific beam index number and/or the number of the specific beam indexes may be configured in advance, may be configured by the base station, or may be configured depending on the implementation of the NCR and/or the base station. Further, at least one of two or more specific beam indexes may correspond to an ON/OFF indication that turns NCR ON, and at least one of the others may correspond to an ON/OFF indication that turns NCR OFF.

In Option 1 of Case 1 of Proposal 2, at least some (a part) of parameters and/or mechanism related to the indication of a time resource for ON/OFF indication are in common with those for beam indication. In this method, the parameter and/or mechanism related to the indication of the time resource for ON/OFF indication and the parameter and/or mechanism related to the indication of the time resource for beam indication need not be indicated/configured independently of each other. Thus, even in a case where the ON/OFF indication is explicitly performed, it is possible to suppress an increase in the overhead of signaling.

For example, in a case where an indication mechanism based on a beam index, which is a mechanism of beam indication, is used for ON/OFF indication, beam indication and ON/OFF indication can be performed based on information related to beam indication (for example, a beam index and a time resource), and thus, an increase in signaling overhead can be suppressed.

### <Option 2 of Case 1 of Proposal 2>

In Option 2, a specific time resource is configured.

For example, a time resource specific to the ON/OFF indication is configured separately from the time resource for beam indication. Exemplarily, a specific time resource is configured for the ON/OFF indication to optimize the signaling overhead.

For example, in a case where a new information element (IE) is defined for NCR, a field including information for ON/OFF indication (for example, a TDRA table) and a field including information for beam indication are defined separately in the IE.

Further, a common mechanism may be used between the ON/OFF indication and the beam indication. For example, a table of time resources is configured by RRC, and the time resources are dynamically indicated via DCI. In other words, a mechanism in which, for example, a table of time resources is configured by RRC and the time resources are dynamically indicated via DCI may be used for the configuration of time resources specific to the ON/OFF indication.

In Option 2 of Case 1 of Proposal 2, a specific time resource is configured for the ON/OFF indication, and thus the time resource can be configured independently of the time resource for beam indication, thereby optimizing the signaling overhead. For example, in a case where the time during which NCR is ON and/or the time during which NCR is OFF are continuous, the time resource for the ON/OFF indication can be configured according to the continuous time, which eliminates the need to repeat the ON/OFF indication for the continuous time. Thus, the overhead of signaling can be optimized.

Options 1 and 2 of Case 1 in Proposal 2 described above will be described with reference to the drawings.

FIG. 7 is a diagram illustrating an example of a beam indication and an ON/OFF indication for Proposal 2. FIG. 7 illustrates exemplary beam indication, ON/OFF indication in each of Option 1 and Option 2, and a behavior of NCR in an access link based on the indication. Note that the horizontal axis in the behavior of the NCR in the access link represents the time axis. The beam indication includes a time resource and identification information (beam index) of a beam to be used in the time resource.

In the example illustrated in Option 1 in FIG. 7, the parameter/indication mechanism in common with that for the beam indication is used for the time resource for the ON/OFF indication, and thus, the division of the time resource (the number and size of the time resources) in the ON/OFF indication is in common with the division of the time resource in the beam indication. By making the division of time resources common in this manner, an increase in the overhead of signaling can be suppressed even in a case where the ON/OFF indication is explicitly performed.

In the example illustrated in Option 2 in FIG. 7, a specific time resource is configured for the ON/OFF indication, and thus, the division of the time resource (the number and size of the time resources) in the ON/OFF indication is configured independently of the division of the time resource in the beam indication. In the example of FIG. 7, one section of the time resource in the ON/OFF indication corresponds to four sections of the time resource in the beam indication. In this case, the ON/OFF indication may indicate that the time resource in the one section is turned ON. Thus, the overhead of signaling can be appropriately adjusted in the case in which the time resource in the one section is indicated to be ON compared to the case in which each of the four sections of the time resource in the beam indication is indicated to be ON.

### <Variation of Case 1 of Proposal 2>

In a variation of Case 1 of Proposal 2, an explicit OFF may be indicated. This makes it possible to turn NCR-Fwd off. Turning NCR-Fwd OFF can avoid interference with surrounding communication apparatuses.

Note that the method for explicitly indicating OFF is not particularly limited. For example, as illustrated in Option 1 of Case 1, at least one of two or more specific beam indexes may correspond to an ON/OFF indication to turn NCR ON, and at least one of the others may correspond to an ON/OFF indication to turn NCR OFF. As described above, an explicit OFF indication may be performed using a specific beam index.

### <Case 2 of Proposal 2>

In Case 2 of Proposal 2, the ON/OFF indication is an implicit way as shown in Option 1 of Proposal 1. This case may be a case of an indication only when beam management for an access link is not supported. In other words, in a case where beam management for an access link is supported, Case 2 of Proposal 2 need not be applied.

Note that, in Case 2 of Proposal 2, the beam indication is assumed to include a "beam index" and a "time resource."

In this case, it is not considered that the ON/OFF indication and the beam indication are performed simultaneously. Accordingly, only the ON/OFF indication is configured/indicated. For example, only the ON/OFF indication is configured/indicated for FR1 with a single beam for the access link.

Case 2 of Proposal 2 may be regarded as a case in which the ON/OFF indication is performed using at least a part of the configuration/indication mechanism for beam indication. For example, the same mechanism as the configuration/indication mechanism for beam indication may be used for ON/OFF indication. In Case 2 of Proposal 2, beam management for the access link is not supported, and beam indication is not necessary. Thus, the configuration/indication mechanism for beam indication may be used for ON/OFF indication.

For example, the configuration of the time resource (for example, a field of the time resource configuration in RRC) may be common between the beam indication and the ON/OFF indication.

Further, a specific index (for example, "0") or a beam index of "NULL" may be indicated, or no beam index may be indicated. For example, in a case where NCR indicates a capability that does not include supporting beam management for an access link, the NCR may recognize that a specific indication (for example, an indication that the beam index is "0") is for an ON/OFF indication. In this case, the base station may perform a beam indication with a beam index of 0 as the ON/OFF indication based on the capability that the NCR does not support beam management for the access link.

Note that, in the above, an example has been described in which the configuration of the time resource and the like are common between the beam indication and the ON/OFF indication, but an individual configuration/indication between the beam indication and the ON/OFF indication may be considered. For example, in RRC, time resource configurations may be provided in different fields. Alternatively, time resources may be indicated by different DCI formats. Alternatively, time resources may be indicated by a MAC CE.

In Case 2 of Proposal 2, the ON/OFF indication is performed by the same configuration and indication mechanism as the beam indication, so that it is not necessary to prepare individual configurations and indication mechanisms for the ON/OFF indication and the beam indication, thereby avoiding the complexity of the indication mechanism. Further, updating the specification can be avoided and the impact on the specification can be suppressed.

### <Variation of Proposal 2>

Note that, in Proposal 2 described above, an example has been described in which the parameter/indication mechanism is common between the ON/OFF indication and the beam indication, but the present disclosure is not limited thereto. For example, different mechanisms may be used for the semi-static indication and the dynamic indication in the ON/OFF indication. Further, in a case where the ON/OFF indication and the beam indication are performed integrally, different mechanisms may be used for the semi-static indication and the dynamic indication.

Note that, in Proposal 2, a collective indication of a beam indication for an access link and an indication of the ON/OFF indication for NCR-Fwd has been exemplified, but the present disclosure is not limited thereto. For example, an indication other than the beam indication and the ON/OFF indication for NCR-Fwd may be performed collectively. The indication other than the beam indication may be, for example, at least one of indications related to communication control such as a power indication, a TDD configuration, a timing indication, and the like.

### <Capability of NCR>

NCR may report the following capabilities to the base station as capabilities for ON/OFF indication and beam management.
- Capability for beam management for an access link and/or side control information of ON/OFF indication

NCR may report the following capabilities as capabilities for the supported frequency band.
- Capability for all bands (for example, a single capability) (for example, capability as NCR)
- Capability per frequency band
- Capability per frequency range (for example, capability in each of FR1/FR2)

Note that the single capability may correspond to a capability for all bands, rather than a capability for each frequency band.

NCR may report the following capabilities as capabilities for supporting Duplex.
- Capability for all duplexing (for example, a single capability) (for example, capability as a repeater)
- Capability per duplexing (for example, capability in each of TDD/FDD and the like)

Note that the single capability may correspond to one capability for all duplexing, rather than a capability for each duplexing.

Further, NCR may report to the base station whether the NCR supports each of the options of the proposals described above as a capability of NCR.

For example, each of the above-described proposals may be applied in a case where the function corresponding to the proposal is supported by NCR and/or in a case where the function corresponding to the proposal is activated by a parameter of a higher layer.

Note that, in the above-described embodiment, "ON" may be read as active, valid, enabled, activated, or the like, and "OFF" may be read as inactive, invalid, disabled, sleep, or the like. The term "signal" may be read as information, control information, notification, or the like.

Further, with respect to the control of the ON and OFF of the NCR described above, indicating ON to NCR may correspond to transmitting an indication to turn NCR ON. Further, turning NCR ON may correspond to the NCR turning NCR-Fwd ON based on the indication and the NCR being turned ON based on the indication. Further, turning NCR ON may correspond to changing the NCR from an OFF state to an ON state. Note that, based on an indication to turn NCR ON, the NCR may turn NCR-Fwd ON and need not turn NCR-MT ON among the two functional entities. For example, NCR-MT may continue to operate without being turned OFF, regardless of the indication to turn ON or OFF. In other words, turning NCR ON may be replaced with turning NCR-Fwd ON.

Further, indicating OFF to NCR may correspond to transmitting an indication to turn NCR OFF. Further, turning NCR OFF may correspond to the NCR turning NCR-Fwd OFF based on the indication and the NCR being turned OFF based on the indication. Further, turning NCR OFF may correspond to changing the NCR (or NCR-Fwd) from the ON state to the OFF state. Note that, based on an indication to turn NCR OFF, the NCR may turn NCR-Fwd OFF and need not turn NCR-MT OFF among the two functional entities. In other words, turning NCR OFF may be replaced with turning NCR-Fwd OFF.

Further, turning NCR ON may correspond to a state in which the transfer operation in NCR is executable. Turning NCR ON may be read as activating the NCR, making the NCR available, enabling the NCR, or the like. Further, NCR being ON in a certain time interval may mean transferring a signal from gNB to UE and/or transferring a signal from UE to gNB in the certain time interval. Here, the specific time interval may be, for example, a time interval having a unit such as a slot, a symbol, a subframe, a second, a millisecond (ms), or a microsecond (µs).

Further, turning NCR OFF may correspond to a state in which the transfer operation in NCR is not executable. Turning NCR OFF may be read as putting the NCR into a sleep state (or inactive), making the NCR unavailable, disabling the NCR, or the like. Further, NCR being OFF in a certain time interval may mean that no signal is transferred from gNB to UE and/or no signal is transferred from UE to gNB in the certain time interval.

### (Apparatus Configuration)

Next, an exemplary functional configuration of base station 100 and terminal 200 that execute the processing and operations described so far will be described. Base station 100 and terminal 200 may have functions for implementing the embodiment described above. Note that base station 100 and terminal 200 may each have only some of the functions described in the embodiment.

### <Base Station>

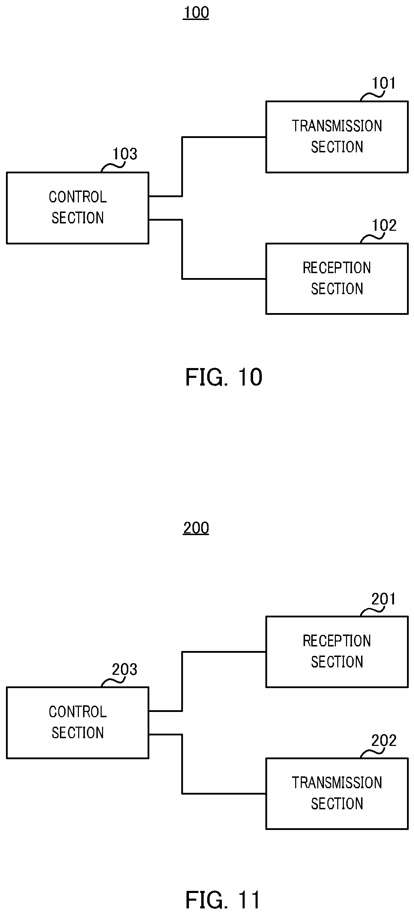

FIG. 10 is a block diagram illustrating an exemplary configuration of base station 100 according to an embodiment of the present disclosure. The base station includes, for example, transmission section 101, reception section 102, and control section 103. Base station 100 communicates with terminal 200 (see FIG. 11) by radio. Note that, transmission section 101 and reception section 102 may be collectively referred to as a communication section.

Transmission section 101 transmits the DL signal to terminal 200. For example, transmission section 101 transmits a DL signal under the control of control section 103. For example, the DL signal may include information indicating scheduling related to signal transmission of terminal 200 (for example, UL grant), control information of a higher layer, and the like.

For example, transmission section 101 transmits various control signals (such as control signals in the RRC layer), reference signals, data signals, and the like as DL signals to terminal 200 and/or relay apparatus 300. Transmission section 101 transmits, for example, various signals, channels, configuration information, control information, and the like described in the above embodiment to terminal 200 as DL signals.

For example, transmission section 101 transmits information related to the control of terminal 200 and/or information related to the control of relay apparatus 300, which are generated by control section 103, to terminal 200. Further, transmission section 101 transmits the data signal generated by control section 103 to terminal 200.

Reception section 102 receives a UL signal transmitted from terminal 200. For example, reception section 102 receives a UL signal under the control of control section 103. Further, reception section 102 may receive a UL signal transmitted from relay apparatus 300.

For example, reception section 102 receives, as a UL signal, a signal including terminal capability information (for example, UE capability) of terminal 200, various control signals, reference signals, data signals, and the like from terminal 200. Further, reception section 102 may receive a signal including capability information of relay apparatus 300 (for example, the capability of NCR).

Control section 103 controls the overall (communication) operation of base station 100, including the transmission processing in transmission section 101 and the reception processing in reception section 102.

For example, control section 103 acquires information such as data and control information from a higher layer and outputs the information to transmission section 101. Further, control section 103 outputs the data and control information received from reception section 102 to a higher layer.

For example, control section 103 allocates resources for the transmission and reception of DL signals and/or resources for the transmission and reception of UL signals based on signals (for example, data, control information, and the like) received from terminal 200 and/or data and control information acquired from a higher layer. Information on the allocated resource may be included in control information to be transmitted to terminal 200.

Control section 103 executes operations other than the transmission and reception described in the above embodiment (the operations may be executed by transmission section 101 and/or reception section 102).

Furthermore, control section 103 may generate control information related to the transfer operation of relay apparatus 300. Control section 103 may perform resource allocation of the resource to be allocated to relay apparatus 300. Control section 103 may perform an indication related to communication control of relay apparatus 300 via transmission section 101.

### <Terminal>

FIG. 11 is a block diagram illustrating an exemplary configuration of terminal 200 according to an embodiment of the present disclosure. Terminal 200 includes, for example, reception section 201, transmission section 202, and control section 203. Terminal 200 communicates with, for example, base station 100 (see FIG. 10) by radio. Note that, reception section 201 and transmission section 202 may be collectively referred to as a communication section.

Reception section 201 receives a DL signal transmitted from base station 100. For example, under the control of control section 203, reception section 201 receives a DL signal.

For example, reception section 201 receives various control signals, reference signals, data signals, and the like from base station 100 as DL signals. Reception section 201 receives, for example, various signals, channels, configuration information, control information, and the like described in the above embodiment as DL signals from base station 100.

For example, reception section 201 receives a signal from base station 100.

Transmission section 202 transmits a UL signal to base station 100. For example, transmission section 202 transmits a UL signal under the control of control section 203.

For example, transmission section 202 transmits, as a UL signal, a signal including information on the processing capability of terminal 200, various control signals, reference signals, data signals, and the like to base station 100.

Control section 203 controls the overall (communication) operation of terminal 200, including the reception processing in reception section 201 and the transmission processing in transmission section 202.

For example, control section 203 acquires information such as data and control information from a higher layer and outputs the information to transmission section 202. Further, control section 203 outputs, for example, data and control information received from reception section 201 to a higher layer.

Control section 203 executes operations other than the transmission and reception described in the above embodiment (note that the operations may be executed by reception section 201 and/or transmission section 202).

Note that the signal received by terminal 200 from base station 100 may be a signal directly transmitted from base station 100 or may be a signal transmitted from base station 100 and transferred by relay apparatus 300. Further, the signal transmitted by terminal 200 to base station 100 may be directly received by base station 100 or may be transferred by relay apparatus 300 and received by base station 100. In this case, terminal 200 does not need to recognize whether the signal is transferred by relay apparatus 300.

### <Relay Apparatus>

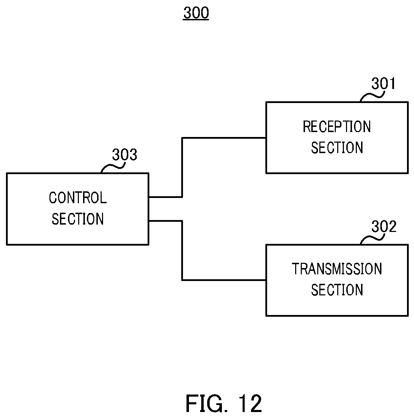

FIG. 12 is a block diagram illustrating an exemplary configuration of relay apparatus 300 according to the embodiment of the present disclosure. Relay apparatus 300 corresponds to an example of NCR. Relay apparatus 300 includes, for example, reception section 301, transmission section 302, and control section 303. Relay apparatus 300 communicates with, for example, base station 100 (see FIG. 10) and terminal 200 (see FIG. 11) by radio. Note that, reception section 301 and transmission section 302 may be collectively referred to as a communication section.

Reception section 301 receives a DL signal transmitted from base station 100. Further, reception section 301 receives a UL signal transmitted from terminal 200. For example, reception section 301 receives a DL signal and a UL signal under the control of control section 303. Note that the signal to be received may include a signal addressed to base station 100, a signal addressed to terminal 200, and a signal addressed to relay apparatus 300.

Transmission section 302 transmits the UL signal which is received from terminal 200 and is addressed to base station 100, to base station 100. Further, transmission section 302 transmits the DL signal which is received from base station 100 and is addressed to terminal 200, to terminal 200. For example, transmission section 302 transmits the UL signal under the control of control section 303.

Control section 303 controls the overall (communication) operation of relay apparatus 300, including the reception processing in reception section 301 and the transmission processing in transmission section 302.

For example, control section 303 acquires information such as data and control information from a higher layer and outputs the information to transmission section 302. Further, control section 303 outputs, for example, data and control information received from reception section 301 to a higher layer.

Control section 303 executes operations other than the transmission and reception described in the above embodiment (note that the operations may be executed by reception section 301 and/or transmission section 302).

For example, control section 303 controls the on or off of the operation based on an indication related to the on or off of the operation executed by relay apparatus 300 between base station 100 and terminal 200, the indication being explicitly or implicitly indicated by the control information received from base station 100.

Further, in FIG. 12, a configuration is illustrated in which one of each of reception section 301, transmission section 302, and control section 303 is included, but the present disclosure is not limited thereto. For example, as described above, relay apparatus 300 (for example, NCR 300) includes two functional entities: NCR-MT, which performs communication in the C-link; and NCR-Fwd, which performs communication in the access link and the backhaul link. Therefore, relay apparatus 300 may include a reception section, a transmission section, and a control section for each of NCR-MT and NCR-Fwd. Further, relay apparatus 300 may include a reception section, a transmission section, and a control section for each communication of the C-link, the access link, and the backhaul link.

Note that relay apparatus 300 (for example, NCR) in the present disclosure may be an example of a communication apparatus. Further, relay apparatus 300 in the present disclosure may be referred to by another name such as a transfer apparatus or a relay apparatus. Further, relay apparatus 300 in the present disclosure may be replaced with terminal 200 (for example, UE). For example, relay apparatus 300 may be regarded as terminal 200 having a transfer function (or a relay function).

### (Summary of Embodiment)

According to an embodiment of the present disclosure, a communication apparatus is provided. The communication apparatus includes: a reception section that receives control information; and a control section that controls turning on or off of an operation performed by the communication apparatus between a base station and a terminal, based on an indication related to the turning on or off of the operation, the indication being explicitly or implicitly indicated by the control information.

With the above configuration, the communication apparatus can be appropriately controlled to be turned on and off based on the indication. Further, by appropriately controlling turning on and off, it is possible to suppress the deterioration of communication quality between the base station and the terminal, and to suppress interference with surrounding communication apparatuses and an increase in power consumption of the communication apparatus.

In the communication apparatus, the control information includes first information related to communication control performed by the communication apparatus, the control section controls the turning on or off of the operation based on the indication related to the turning on or off of the operation, the indication being implicitly indicated by the first information, and the communication control is at least one of beam control, power control, time division duplex control, and/or timing control performed by the communication apparatus.

With the above configuration, the indication of turning the operation on or off is not performed independently of other indications, thereby suppressing an increase in the overhead of signaling related to the indication.

In the communication apparatus, the first information includes information on a time resource in which the turning on or off of the operation is performed, and at least a part of a method for configuring the time resource in which the turning on or off of the operation is performed is in common with a method for configuring a time resource in which the communication control is performed.

With the above configuration, the indication of turning the operation on or off is not performed independently of other indications, thereby suppressing an increase in the overhead of signaling related to the indication.

In the communication apparatus, the control information includes: first information related to communication control performed by the communication apparatus; and second information related to the turning on or off of the operation, and the control section controls the turning on or off of the operation based on the indication related to the turning on or off of the operation, the indication being explicitly indicated by the second information.

With the above configuration, it is possible to explicitly perform an indication regarding turning on or off of the operation, and thus, the communication apparatus can appropriately control turning on and off. Further, by appropriately controlling turning on and off, it is possible to suppress the deterioration of communication quality between the base station and the terminal, and also to suppress interference with surrounding communication apparatuses and an increase in power consumption of the communication apparatus.

In the communication apparatus, the first information includes information related to a time resource in which the communication control is performed, the second information includes information related to a time resource in which the turning on or off of the operation is performed, and at least a part of a method for configuring the time resource in which the turning on or off of the operation is performed is in common with a method for configuring a time resource in which the communication control is performed.

With the above configuration, the configuration of the indication is made common, and the indication of turning on or off of the operation is not performed independently of other indications, thereby making it possible to suppress an increase in the overhead of signaling related to the indication.

According to an embodiment of the present disclosure, a communication method is provided. The communication method includes: receiving, by a communication apparatus, control information; and controlling, by the communication apparatus, turning on or off of an operation performed by the communication apparatus between a base station and a terminal, based on an indication related to the turning on or off of the operation, the indication being explicitly or implicitly indicated by the control information.

With the above configuration, the communication apparatus can be appropriately controlled to be turned on and off based on the indication. Further, by appropriately controlling turning on and off, it is possible to suppress the deterioration of communication quality between the base station and the terminal, and also to suppress interference with surrounding communication apparatuses and an increase in power consumption of the communication apparatus.

The present disclosure has been described above. The division of the items in the above description is not essential to the present disclosure, and matters described in two or more items may be combined and used as necessary, and a matter described in one item may be applied to a matter described in another item (as long as the maters do not contradict each other).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

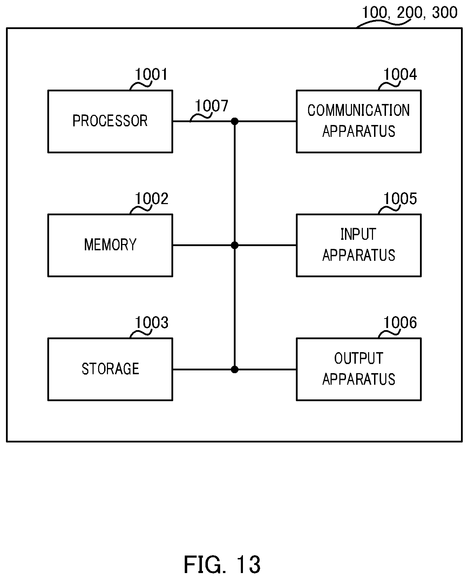

For example, a base station, a terminal, a relay apparatus (e.g., NCR), and so on according to one embodiment of the present disclosure may function as a computer that executes the processes of the radio communication method of the present disclosure. FIG. 13 is a diagram to show an example of a hardware structure of a base station, a terminal, and a relay apparatus according to one embodiment of a present disclosure. Physically, the above-described base station 100, terminal 200, and relay apparatus 300 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100, terminal 200, and relay apparatus 300 may be configured to include one or more of apparatuses shown in the drawings, or may be configured not to include part of apparatuses

Each function of base station 100, terminals 200, and relay apparatus 300 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103 or control section 203, control section 303, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, base station 100, terminal 200, and relay apparatus 300 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, transmission section 202, transmission section 302, reception section 102, reception section 201, reception section 301, and the like, may be realized by communication apparatus 1004. Communication apparatus 1004 may be implemented by physically or logically divided into a transmission section and reception section.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100, terminals 200, and relay apparatus 300 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Supplement to Embodiment)

While the embodiment of the present disclosure has been described above, the disclosed invention is not limited to such an embodiment, and a person skilled in the art would understand various variations, modifications, alternatives, substitutions, and the like. Specific numerical examples have been used in the description to facilitate understanding of the invention, but unless otherwise noted, these numbers are merely examples and any suitable values may be used. The division of the items in the above description is not essential to the present disclosure, and matters described in two or more items may be combined and used as necessary, and matters described in one item may be applied to matters described in another item (as long as they do not contradict each other). The boundaries of the functional sections and processing sections in the functional block diagram do not necessarily correspond to the boundaries of physical components. The operations of a plurality of functional sections may be performed physically by one component, or the operation of one functional section may be performed physically by a plurality of components. The processing procedures described in the embodiment may be performed in a different order as long as there is no contradiction. For convenience of description of the processing, base station 100, terminal 200, and relay apparatus 300 have been described using functional block diagrams, but such apparatuses may be implemented in hardware, software, or a combination thereof. Software that operates on a processor included in base station 100 according to an embodiment of the present disclosure, software that operates on a processor included in terminal 200 according to an embodiment of the present disclosure, and software that operates on a processor included in relay apparatus 300 according to an embodiment of the present disclosure may each be stored in any suitable storage medium, such as a random access memory (RAM), a flash memory, a read-only memory (ROM), an erasable programmable read-only memory (EPROM), an electrically erasable programmable read-only memory (EEPROM), a register, a hard disk (HDD), a removable disk, a CD-ROM, a database, a server, or the like.

### <Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, terminals 200 may have the functions of base stations 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 100 may have the functions of terminal 200 described above.

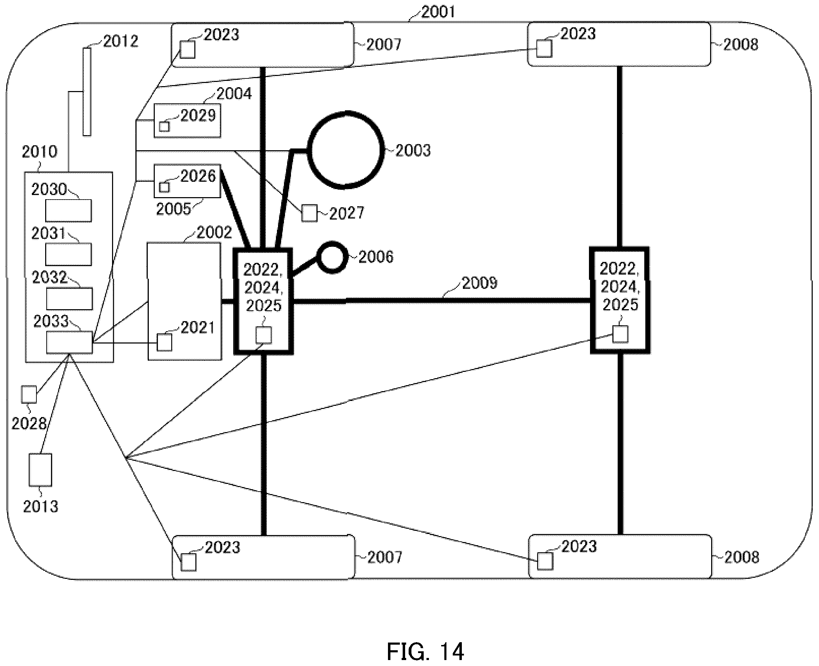

FIG. 14 shows an example of a configuration of vehicle 2001. As shown in FIG. 14, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 2029 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on the PDSCH received by communication module 2013 (or data/information decoded from the PDSCH)). In addition, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, sensors 2021 to 2029 etc., mounted in vehicle 2001.

### <Meaning and Interpretation of Terms>

As used herein, the term "determining" may encompass a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of') as used in the present disclosure does not mean "based only on" (or "only on the basis of"), unless otherwise specified. In other words, the phrase "based on" (or "on the basis of") means both "based only on" and "based at least on" ("only on the basis of' and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. APRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a", "an", and "the", the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Radio communication system
20 NG-RAN
100 Base station (gNB)
200 Terminal (UE)
300 Relay apparatus (NCR)
101, 202, 302 Transmission section
102, 201, 301 Reception section
103, 203, 303 Control section
1001 Processor
1002 Memory
1003 Storage
1004 Communication apparatus
1005 Input apparatus
1006 Output apparatus
1007 Bus

## Claims

1. A communication apparatus, comprising:
a reception section that receives control information; and
a control section that controls turning on or off of an operation performed by the communication apparatus between a base station and a terminal, based on an indication related to the turning on or off of the operation, the indication being explicitly or implicitly indicated by the control information.

2. The communication apparatus according to claim 1, wherein
the control information includes first information related to communication control performed by the communication apparatus,
the control section controls the turning on or off of the operation based on the indication related to the turning on or off of the operation, the indication being implicitly indicated by the first information, and
the communication control is at least one of beam control, power control, time division duplex control, and/or timing control performed by the communication apparatus.

3. The communication apparatus according to claim 2, wherein
the first information includes information on a time resource in which the turning on or off of the operation is performed, and
at least a part of a method for configuring the time resource in which the turning on or off of the operation is performed is in common with a method for configuring a time resource in which the communication control is performed.

4. The communication apparatus according to claim 1, wherein
the control information includes: first information related to communication control performed by the communication apparatus; and second information related to the turning on or off of the operation, and
the control section controls the turning on or off of the operation based on the indication related to the turning on or off of the operation, the indication being explicitly indicated by the second information.

5. The communication apparatus according to claim 4, wherein
the first information includes information related to a time resource in which the communication control is performed,
the second information includes information related to a time resource in which the turning on or off of the operation is performed, and
at least a part of a method for configuring the time resource in which the turning on or off of the operation is performed is in common with a method for configuring a time resource in which the communication control is performed.

6. A communication method, comprising:
receiving, by a communication apparatus, control information; and
controlling, by the communication apparatus, turning on or off of an operation performed by the communication apparatus between a base station and a terminal, based on an indication related to the turning on or off of the operation, the indication being explicitly or implicitly indicated by the control information.
